# DEMANDE DE BREVET EUROPEEN

(11) **EP 2 617 685 A1**
(43) Date de publication de la demande: **24.07.2013**
(21) Numéro de dépôt: 13305063.3
(22) Date de dépôt: 18.01.2013
(51) Int. Cl.: C02F 3/32, B01D 24/10, B01D 36/04, B01D 39/18, B01D 39/04, B01D 39/06, B01D 24/40, C02F 1/00, C02F 3/04

(54) **Procédé et dispositif de lombrifiltration pour l'assainissement dès eaux usées**

(30) Priorité: 19.01.2012 FR 1250533
(71) Demandeur: Nobatek, 64600 Anglet (FR)
(72) Inventeur: Duclos, Lucie, 64200 BIARRITZ (FR); Fillit, Fabien, 40440 ONDRES (FR); Soto, Patricio, 34830 JACOU (FR); Bruneau, Denis, 33650 LA BREDE (FR)
(74) Mandataire: Fantin, Laurent

(57) **Abrégé**

L'objet de l'invention est un dispositif de lombrifiltration pour l'assainissement des eaux usées, dans une habitation individuelle ou collective comprenant un lombrifiltre (18) ainsi que des moyens (16) de prétraitement par réduction des dimensions des particules solides des effluents eaux usées, des moyens (20) de post-traitement et une sortie (22) des eaux claires.

L'invention couvre également le procédé associé.

## Description

La présente invention concerne un procédé et un dispositif de lombrifiltration pour l'assainissement des eaux usées.

La présente invention vise plus particulièrement l'application au traitement des eaux usées de l'habitat individuel ou collectif.

On sait que toutes les habitations ne peuvent être reliées au réseau collectif des eaux usées.

Il existe donc un grand nombre de maisons ou de logements collectifs qui nécessitent un traitement autonome des eaux usées.

Les maisons sont des maisons individuelles, disposant généralement d'une parcelle de terrain. Les logements collectifs peuvent également bénéficier d'un terrain, ou d'une cave.

On connaît déjà des moyens permettant de traiter ces effluents de façon satisfaisante comme les tranchées d'épandage, tertres d'infiltrations, microstations, filtre compact, filtre roseaux. Parmi eux, on utilise couramment des filtres à sable ou à zéolithe.

Ces filtres reçoivent les eaux usées directement qui sont prétraitées par des caissons de préfiltration équipés de géotextiles en milieu aérobie avec développement de bactéries qui éliminent les particules organiques qui constituent la majorité de la charge des eaux usées.

Les fluides qui en sont issus passent à travers le filtre à sable qui n'est autre qu'un filtre mécanique avec différentes granulométries pour éviter de façon connue un colmatage trop rapide.

Les eaux claires issues de cette filtration sont rejetées en milieu naturel.

On comprend dès lors que ce type de filtre se charge au fur et à mesure et nécessite un changement des préfiltres et dans tous les cas du massif filtrant au moins tous les 10 ans.

Cette opération est très lourde et requiert un travail important avec excavation, passage d'engins, etc.

De plus, la qualité de filtration se dégrade régulièrement et inexorablement si bien que les dernières années l'eau rejetée peut être de qualité contestable et le filtre perd sa capacité de traitement, obligeant un surdimensionnement initial. Il existe d'autres techniques de traitement des eaux usées mais de type industriel comme le lagunage ou le traitement en roselières, difficilement transposables aux particuliers.

On connaît aussi des traitements en bac avec super oxygénation mais l'investissement reste lourd et le suivi de pilotage très contraignant et délicat même s'il existe des moyens automatisés de contrôle avec le risque de rejeter en milieu naturel des eaux peu claires en cas de défaut de fonctionnement.

Le but de la présente invention est de proposer un procédé et un dispositif de traitement qui soient très économes en énergie, qui rejettent dans le milieu naturel des eaux claires de façon certaine, qui soient peu complexes à piloter, qui puissent être mis en oeuvre sans faire appel à des moyens lourds.

En outre, il convient que le dispositif puisse présenter une durée de vie infinie moyennant des ajustements et remplacements de certaines parties sans intervention lourde.

Les procédé et dispositif selon la présente invention doivent éviter de générer de quelconques odeurs de façon notamment à pouvoir le disposer à proximité des logements voire dans une dépendance.

En effet, une micro station par exemple produit des boues qui sont stockées dans une fosse de récupération qui nécessite des vidanges régulières avec des intervalles de quelques mois à 2 à 4 ans. Ces boues collectées sont ensuite dirigées vers un centre de traitement pour séparer les matières solides qui seront enfouies et les matières liquides qui sont traitées comme un lixiviat.

Les solutions de l'art antérieur conduisent à la production de boues qu'il faut faire évacuer et traiter moyennant des frais, ce à quoi pallie la présente invention.

La présente invention est maintenant décrite en regard des dessins annexés, dessins sur lesquels les différentes figures représentent :
- Figure 1 : une vue schématique, en coupe d'une installation selon la présente invention, et
- Figure 2 : une vue schématique, en coupe d'une variante d'installation de décantation,
- Figure 3 : une vue identique à la première, équipée de façon complémentaire d'un module de sécurité et tampon.

La présente invention est maintenant décrite en regard des figures annexées suivant un mode réalisation non limitatif.

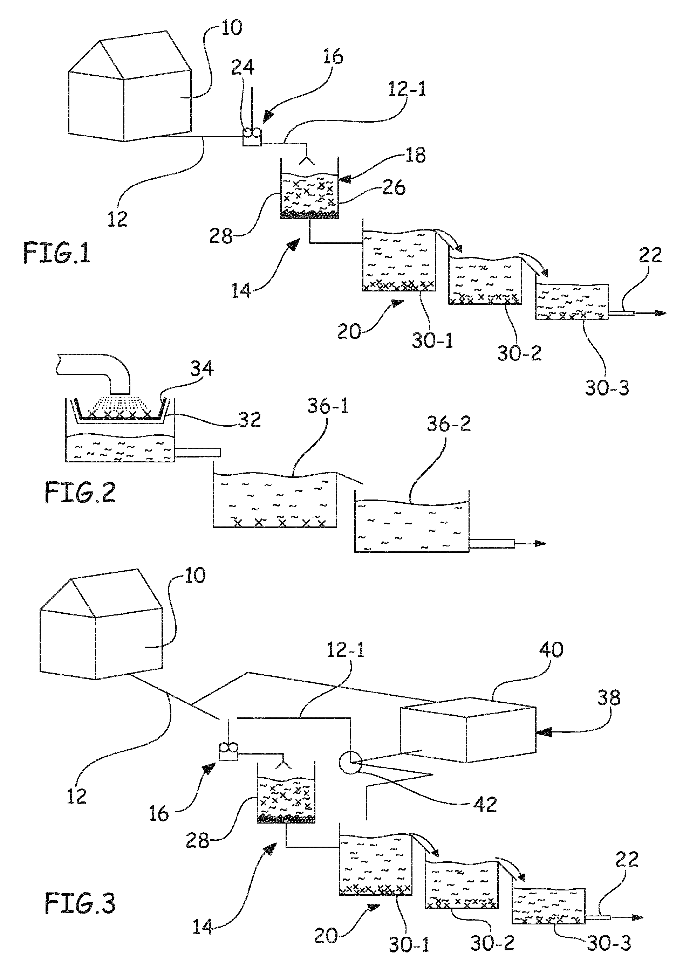

Sur le schéma de la figure 1, le logement est référencée 10 et les effluents 12 domestiques sont conduits vers le dispositif 14 selon l'invention mettant en oeuvre le procédé selon la présente invention.

Le procédé selon l'invention est basé notamment sur la lombrifiltration, c'est-à-dire une filtration utilisant des lombrics (ou lombriciens) épigés digesteurs pour assurer le traitement des effluents en coaction avec des bactéries aérobies.

Il sera décrit plus tard, une fois l'agencement du dispositif présenté.

L'agencement est présenté suivant une circulation gravitaire lorsque les dispositions du lieu le permettent. Il sera expliqué les éventuels moyens complémentaires à prévoir en cas d'impossibilité de prévoir une circulation gravitaire.

Le dispositif 14 selon la présente invention comporte au moins des moyens 16 de prétraitement par réduction des dimensions des particules solides des effluents eaux usées, un lombrifiltre 18 et des moyens 20 de post-traitement, et une sortie 22 des eaux claires dudit dispositif 14.

Sur la figure 1, les effluents 12 domestiques entrent dans les moyens 16 de réduction des dimensions des particules solides en l'occurrence un broyeur 24. Les effluents 12 domestiques comprennent généralement des particules dont les dimensions sont de l'ordre de quelques µm jusqu'à quelques centimètres.

La cuve du broyeur présente un volume pouvant aller jusqu'à 50 litres.

Ce broyeur 24 permet de réduire la dimension des particules solides à des dimensions inférieures à 2 mm.

Pour une maison individuelle avec 5 équivalents-habitants, un broyeur suffisant nécessite une puissance de 400 W et la durée de fonctionnement est d'une minute environ pour broyer et évacuer 10 litres d'eaux usées.

On constate donc que pour un volume journalier d'effluents 12 domestiques inférieur à 1000 litres par jour pour les 5 éq/hab, cela nécessite un temps de fonctionnement d'environ 1h30, soit moins de 1 kWh/jour.

Cela représente une durée de mise en service faible et donc une consommation énergétique annuelle très limitée.

Dans le cas d'une maison individuelle de capacité supérieure à 5 équivalents-habitants, éq/hab, ou d'un logement collectif, jusqu'à 200 éq/hab pour donner un ordre d'idée, un broyeur plus puissant peut être utilisé d'une puissance de 3000W, il consommera pour 100 éq/hab, soit environ 20 logements, 100 kWh/jour.

Dans le cas d'une maison individuelle de capacité supérieure à 5 éq/hab, ou d'un logement collectif, éventuellement un système de tamis ou de dégrillage de sécurité placé en amont du broyeur, évite que des objets tels que jouets, déchets solides, évacués avec les eaux usées n'endommagent le broyeur.

Les effluents 12-1 ainsi pré traités se présentent sous la forme d'un fluide chargé qui est envoyé par le broyeur 24 qui assure le refoulement vers le lombrifiltre 18 prévu.

Les effluents 12-1 pré traités sont répartis sur le dessus du lombrifiltre par aspersion.

Pour une maison individuelle de 5 éq/hab, le lombrifiltre comprend une cuve 26 d'environ 2,00m de hauteur sur environ 1,50m de diamètre.

Dans le cas d'un logement de capacité supérieure, ou d'un logement collectif, plusieurs cuves seront utilisées, ou une cuve de diamètre supérieure (il faut respecter une surface minimale de filtration de 0,25 m² par éq/hab).

Le lombrifiltre peut comporter des moyens d'aspersion afin de maintenir une humidité constante dans ledit lombrifiltre.

La composition du lombrifiltre comporte différentes couches comprenant principalement des composés lignocellulosiques constituant des couches de milieu de développement des lombriciens et des couches de filtration/aération, de préférence minérales.

Cette cuve comprend un milieu 28 dont un exemple de composition est récapitulé dans le tableau qui suit :

| Elément du substrat (de haut en bas) | Hauteur |
|---|---|
| Couche active organique absorbante où les vers sont actifs avec une coaction bactérienne : éclats de hêtre + copeaux de chanvre (50%/50%) | Environ 1m |
| Film à maille | - |
| Couche de filtrage et de décomposition bactérienne : pouzzolane | Entre 0,1 et 0,2m |
| Couche de drainage : galets de rivière | Entre 0,1 et 0,2m |

Des lombriciens ont été introduits dans la première couche avec leur milieu d'élevage. La population s'auto régule en fonction de la quantité de matière organique à digérer. Pour une installation de type 5 éq/hab une population de 5000 lombriciens au minimum est adaptée à la mise en oeuvre du système. La population se développe ensuite autour de 25 000 lombriciens/m² et permet un assainissement adapté. Pour des installations destinées à un nombre supérieur d'équivalents-habitants, le nombre de lombrics à mettre en oeuvre augmentera proportionnellement (exemple : pour 50 éq/hab il faudra au départ 50 000 lombriciens).

L'eau écoulée à travers la cuve du lombrifiltre est recueillie pour une partie en sortie de la cuve 26 du lombrifiltre tandis que les particules organiques retenues sont consommées par les lombriciens et les bactéries aérobies. On note que le broyeur agit comme un tampon et permet d'alimenter le lombrifiltre de façon discontinue, ce qui conduit les lombriciens à consommer les matières organiques dans l'intervalle, avant qu'il n'en arrive de nouvelles.

Il est certain que ce caractère discontinu évite la saturation du filtre et le fait que les matières organiques soient broyées pour être ramenées à des dimensions facilement ingérables par les lombriciens et facilement dégradables pour les autres microorganismes rend l'opération de transformation plus rapide et compatible avec le volume des matières organiques. Cette alimentation discontinue est un avantage supplémentaire et complémentaire de celui de l'auto régulation qui provoque un accroissement de la population si le volume de matières organiques est suffisant.

L'eau en sortie du lombrifiltre est exempte de matières organiques mais reste chargée des matières résultant de la dégradation naturelle de la couche organique, à savoir des matières végétales, biodégradables et sans odeur, pouvant être dénommées "farine".

Cette matière n'est pas comparable aux boues issues des agencements de l'art antérieur puisqu'il ne s'agit pas des matières organiques brutes directement séparées des effluents organiques.

Il convient pour obtenir une eau claire apte à être renvoyée vers le milieu naturel, en surface ou dans un fossé, de finaliser le traitement de cette eau de sortie du bac de lombrifiltration qui est chargée.

A cet effet, il est prévu des moyens 20 de post traitement. Ces moyens 20 de post traitement consistent notamment en des systèmes à décantation, par exemple à bacs 30 de décantation en cascade, successifs. En l'occurrence, le nombre de bacs est de trois.

Avantageusement, l'écoulement du bac de lombrifiltration est gravitaire et l'eau chargée en farine est recueillie dans un premier bac 30-1 et lorsque le premier bac est plein, l'eau chargée en farine a subi une première décantation et une première partie de la charge de farine est accumulée au fond du premier bac 30-1.

La surverse passe dans le deuxième bac 30-2. L'eau plus faiblement chargée en farine subit une nouvelle décantation et de même poursuit le traitement par décantation dans un troisième bac 30-3.

De façon à tenir compte des décantations successives, les bacs 30-1 à 30-3 ont des surfaces et des volumes qui diminuent, ce qui est un atout pour la compacité de l'installation.

Un mode de réalisation propose les valeurs suivantes, mises en application dans une installation de type 5 équivalents/personne :

| | **Surface indicative (m²)** | **Hauteur indicative (m)** | **Volume indicatif (m³)** | **Longueur indicative (m)** |
|---|---|---|---|---|
| **Bac 30-1** | 0,53 | 0,76 | 0,40 | 0,73 |
| **Bac 30-2** | 0,29 | 0,70 | 0,20 | 0,39 |
| **Bac 30-3** | 0,17 | 0,60 | 0,10 | 0,23 |

Ces valeurs sont données pour une largeur constante de 0,75 m de large.

Ceci permet de traiter environ un volume de 700 litres d'effluents.

Dans le cas d'une maison individuelle de capacité supérieure à 5 éq/hab, ou d'un logement collectif, les dimensions de ce système en cascade pourront être augmentées, mais il n'y a pas nécessité de respecter une proportionnalité entre les valeurs du tableau ci-dessus et le nombre d'éq/hab. En effet, l'eau s'écoule dans les trois bacs plus ou moins vite en fonction du volume sortant du lombrifiltre, mais la dimension des bacs n'influera pas sur le passage de l'eau. Si plusieurs cuves de lombrifiltre sont utilisées, plusieurs systèmes en cascades pourront y être associés.

Il est aussi possible en variante, comme sur la figure 2, de réaliser une filtration sur un panier ajouré 32 équipé d'un géotextile 34, l'ensemble étant placé dans un regard. Cet agencement est d'une efficacité suffisante à lui tout seul. Si nécessaire, il est possible d'améliorer encore le traitement de l'eau recueillie en sortie du panier ajouré 32 par passage dans un premier bac 36-1 où elle est décantée et par passage dans un second et dernier bac 36-2.

De façon préférentielle, cette eau est utilisable, en dehors d'un épandage dans le milieu hydraulique superficiel, pour un arrosage hors cultures vivrières.

Là encore si plusieurs cuves de lombrifiltre sont utilisées, plusieurs regards avec paniers ajourés pourront y être associés.

La farine produite et qui serait retenue sur le filtre en géotextile peut être retirée du filtre pour entretien.

Ce filtre est de préférence conformé au profil de son support c'est-à-dire le filtre ajouré et la fréquence de remplacement dépend de l'intensité de l'utilisation.

Quant aux farines recueillies, elles sont utilisables immédiatement en tant que compost.

Selon la présente invention, il est prévu des moyens de refroidissement de l'eau amenée à la cuve du lombrifiltre car les lombriciens requièrent un milieu de vie à température de préférence autour de 20°C, même s'ils peuvent tolérer des températures plus élevées avec un maximum de 30°C.

Pour ce refroidissement, une solution consiste en l'installation d'une cuve tampon entre le broyeur et le lombrifiltre.

Il est également possible de prévoir un échangeur à serpentin disposé dans le bac de post traitement de façon que l'eau de sortie du broyeur soit ramenée à une température adaptée si elle devait être trop chaude, le fluide dans le bac de post traitement étant à la température ambiante.

En complément du dispositif qui vient d'être décrit, il est aussi prévu d'associer un module 38, de sécurité d'une part et qui peut être utilisé durant des opérations de maintenance d'autre part.

Ce module 38 de sécurité comprend une cuve 40 qui est utilisable en tant que cuve tampon comme décrit plus haut, qui est connectée en dérivation sur le circuit d'amenée des effluents 12 chargés de matière organique venant du lieu de production des effluents.

Il est ainsi possible de conduire directement les effluents 12 bruts dans cette cuve 40.

Cette cuve est également connectée aux moyens 16 de réduction des dimensions des particules solides en l'occurrence le broyeur 24, de façon à pouvoir faire réserve tampon, mais pouvoir remettre dans le circuit les effluents bruts, une fois le dispositif apte à les recevoir.

Si la capacité de la cuve reste insuffisante en regard de la remise en service du lombrifiltre, la cuve 40 du module 38 de sécurité est reliée au moins aux moyens 20 de post traitement par décantation. Une vanne 42 trois voies est un moyen adapté pour gérer ces circulations.

Pour une installation de type 5 éq/hab, une capacité adaptée d'une telle cuve 40 pour ce module de sécurité est de 1500 litres, ce qui correspond à environ deux jours d'autonomie. Dans le cas d'une maison individuelle de capacité supérieure à 5 éq/hab, ou d'un logement collectif, les dimensions de cette cuve évoluent proportionnellement au nombre d'éq/hab, ou plusieurs cuves seront mises en oeuvre en lieu et place d'une cuve de grande capacité.

L'ensemble des éléments du dispositif doit travailler en aérobie, si bien qu'il faut faire des apports d'air, ceux-ci étant réalisés à travers une ventilation naturelle grâce à des cheminées adaptées.

De même, en cas de matière organique insuffisante, par exemple en période d'absence d'occupation, les lombriciens dégradent le substrat organique, comme mentionné ci-avant pour assurer leur alimentation minimale. Si les lombriciens doivent recevoir des compléments alimentaires, il est possible d'adjoindre du son, notamment du son de blé.

Le niveau du substrat organique peut être refait plusieurs fois par an, généralement au moins 2 fois, pour maintenir la qualité de l'épuration. L'installation selon la présente invention requiert un faible entretien et peut durer une dizaine d'années avant de nécessiter un curage du lombrifiltre qui reste d'un faible volume comparé à celui d'un filtre à sable ou à zéolithe.

Le coût d'une telle installation est limité et ne nécessite qu'un travail de terrassement limité en cas d'espace disponible trop réduit.

Le seul matériel ayant besoin d'une vidange périodique, de l'ordre de deux ans, est le broyeur, ceci comme tous les broyeurs. Il est à remarquer que ces matériels ont fait de nombreux progrès et leur entretien est de plus en plus simple et les périodes de révision sont de plus en plus distantes.

Le développement des procédé et dispositif selon la présente invention ne peut que favoriser l'amélioration des performances de ces broyeurs.

## Revendications

1. Dispositif de lombrifiltration pour l'assainissement des eaux usées, dans une habitation individuelle ou collective comprenant un lombrifiltre (18) ainsi que des moyens (16) de prétraitement par réduction des dimensions des particules solides des effluents eaux usées, des moyens (20) de post-traitement et une sortie (22) des eaux claires.

2. Dispositif de lombrifiltration pour l'assainissement des eaux usées, dans une habitation individuelle ou collective selon la revendication 1, **caractérisé en ce que** les moyens de prétraitement comprennent au moins un broyeur(24) apte à réduire les dimensions des particules solides inférieures à 2 mm.

3. Dispositif de lombrifiltration pour l'assainissement des eaux usées, dans une habitation individuelle ou collective selon la revendication 1 ou 2, **caractérisé en ce que** le lombrifiltre (18) comprend différentes couches dont au moins une comprenant au moins des composés lignocellulosiques constituant des couches de milieu de développement des lombriciens et des couches de filtration/aération de préférence minérales.

4. Dispositif de lombrifiltration pour l'assainissement des eaux usées, dans une habitation individuelle ou collective selon l'une quelconque des revendications précédentes, **caractérisé en ce que** les moyens (20) de post-traitement comprennent des bacs (30) de décantation en cascade, successifs, par surverse.

5. Dispositif de lombrifïltration pour l'assainissement des eaux usées, dans une habitation individuelle ou collective selon l'une quelconque des revendications 1 à 3, **caractérisé en ce que** les moyens (20) de post-traitement comprennent au moins un panier ajouré (32) équipé d'un géotextile (34), suivi de bacs (36-1, 36-2) de décantation.

6. Dispositif de lombrifiltration pour l'assainissement des eaux usées, dans une habitation individuelle ou collective selon l'une quelconque des revendications précédentes, **caractérisé en ce qu'**il comprend au moins un module (38) de sécurité incluant une cuve (40) qui est connectée en dérivation sur le circuit d'amenée des effluents (12) chargés de matière organique.

7. Dispositif de lombrifiltration pour l'assainissement des eaux usées, dans une habitation individuelle ou collective selon l'une quelconque des revendications précédentes, **caractérisé en ce qu'**il comprend des moyens de refroidissement de l'eau pulvérisée dans le lombrifiltre.

8. Dispositif de lombrifiltration pour l'assainissement des eaux usées, dans une habitation individuelle ou collective selon la revendication 7, **caractérisé en ce que** les moyens de refroidissement consistent en un échangeur à serpentin disposé dans le bac des moyens (20) de post traitement.

9. Procédé de traitement des eaux usées, dans une habitation individuelle ou collective comprenant un dispositif selon l'une quelconque des revendications précédentes, **caractérisé en ce qu'**il consiste en la succession des étapes suivantes :
- Réduction des dimensions des particules contenues dans lesdites eaux usées à des dimensions inférieures à 2 mm,
- Digestion des particules organiques et lignocellulosique par des lombriciens en milieu de vie desdits lombriciens en coaction avec des bactéries,
- Recueil des farines issues de la digestion des lombriciens, de l'action bactérienne et d'un processus naturel de dégradation de la couche organique.

10. Procédé de traitement des eaux usées, dans une habitation individuelle ou collective comprenant un dispositif selon l'une quelconque des revendications précédentes, **caractérisé en ce qu'**il inclut un dégrillage de sécurité préalable.

11. Procédé de traitement des eaux usées, dans une habitation individuelle ou collective selon la revendication 9 ou 10, **caractérisé en ce qu'**il prévoit un contrôle de la température du milieu de vie desdits lombriciens.
